# EUROPEAN PATENT APPLICATION

(11) **EP 3 421 390 A1**
(43) Date of publication of application: **02.01.2019**
(21) Application number: 17178714.6
(22) Date of filing: 29.06.2017
(51) Int. Cl.: B65D 85/804

(54) **BEVERAGE PREPARATION APPARATUS AND CARTRIDGES WITH USE INDICATION**

(71) Applicant: Koninklijke Philips N.V., 5656 AE Eindhoven (NL)
(72) Inventor: ZWART, Bart-Jan, 5656 AE Eindhoven (NL); EELMAN, Theo, 5656 AE Eindhoven (NL)
(74) Representative: de Haan, Poul Erik

(57) **Abstract**

The present invention relates to a cartridge containing a beverage preparation ingredient and a beverage preparation apparatus for use with the cartridge. At least one of the surfaces of the cartridge comprises a patch of material, said patch being adapted to be at least partially dissolved or removed by fluid entering or flowing around the cartridge and to cause a detectable change indicating that fluid has made contact with the patch of material.

## Description

### FIELD OF THE INVENTION

The invention relates to a cartridge for containing a beverage preparation ingredient such as coffee or tea and a beverage preparation apparatus for use with such a cartridge.

### BACKGROUND OF THE INVENTION

Beverage preparation apparatuses are well known in the food science and consumer goods area. Such apparatuses allow a consumer to prepare at home, or a commercial outlet, a given type of beverage. Such beverages may be a coffee-based beverage, for example an espresso, a tea based beverage, soup, hot or cold chocolate, milk or baby food.

Many beverage preparation apparatuses make use of portioned ingredients in a container for the preparation of the beverage. Such portioned containers can be pods, pads or capsules. Collectively, these containers may be referred to as cartridges.

The apparatus typically comprises a receptacle for accommodating the cartridge and a fluid injection system for injecting a fluid, typically water or milk, optionally under pressure, into the cartridge.

The cartridges (also called single serve units or consumables) currently in use are essentially of two types. One type of consumable is generally called a capsule. It is essentially a unit with rigid walls containing the ingredient and a base and typically a filter through which the extraction water passes. The capsules may be placed into a chamber essentially defined by two bodies, one shaped to receive some, typically most, of the capsule and a closing body which tightly seals the chamber. The water is introduced into the chamber and traverses the capsule typically after the capsule has been pierced. Due to the rigid shape of the capsule, the hydraulic seals of the chamber usually allow the water to traverse the capsule without recirculating the extracted substance through the chamber.

A second type of consumable of a flatter shape when compared with a capsule is generally called a pod or a pad. It generally comprises two sections made of thin soft material which are paired in order to define a cavity in which a beverage preparation ingredient such as tea or coffee is placed. The material may for example be paper, or a cloth or a non woven fabric with filtering properties. The two sections are generally circular and are coupled along their outer edges usually defining an outer annular flange. The apparatuses which use pods typically have two approximate half shells which are sealed to define a chamber where the pod is placed or more generally a cavity to hold the pod or pad and a lid that closes around the pod or pad.

A single serve cartridge, such as a single serve capsule, pod or pad is intended to be used only once. The producer of the cartridge cannot guarantee its functioning when re-used and the beverage preparation apparatus manufacturer cannot guarantee that the apparatus will function in the intended manner when a cartridge is re-used. When a cartridge which has been used previously is re-filled, particularly with contents of another brand, this may harm the business of the producer of the cartridge and/or the beverage preparation apparatus and potentially be harmful to a consumer if the product is not as described.

Hence there is a need for a method and associated products in which it can be detected in a straight forward and reliable manner whether or not a cartridge such as a coffee or tea capsule, pod or pad has been used previously.

### SUMMARY OF THE INVENTION

It is an object of the present invention to provide a consumable such as a cartridge and an apparatus for incorporating said cartridge which readily indicate whether or not the cartridge has been used previously and particularly whether the cartridge has previously been in contact with a fluid or should not be used again.

According to the invention, there is provided a cartridge for use with a beverage preparation apparatus. The cartridge may contain a beverage preparation ingredient to be dissolved and/or infused and/or extracted by action of a fluid that in use flows or is circulated through the beverage preparation ingredient. The cartridge comprises inner and outer surfaces wherein at least one of said inner and/or outer surfaces comprises a patch of material, said patch being adapted to at least partially dissolve or be removed by said fluid so as to cause a detectable change which indicates that the fluid has made contact with the patch of material.

The detectable change may include the unveiling of a gap or cavity in the cartridge which may be detected by a user and/or by the beverage preparation apparatus. Alternatively or additionally, the gap may be designed as a through hole, which may render the cartridge unsuitable for renewed use after having been used a first time. Alternatively or additionally, the detectable change may include a change in the structure, colour and/or material properties of the patch, which may be detected by suitable sensors. For instance, the change in structure and/or colour may alter the reflection properties of the patch, which may be detected by emitting a light or sound wave onto the patch and monitor the reflection. Other examples of changes in the structure and/or material properties may include changes in the patch material's magnetic and/or conductive properties, which can be measured with suitable sensors, known to the skilled person.

Advantageously, the patch of material may be located at an inner surface of the cartridge. With such location, the patch may be better protected against premature and/or inadvertent contact with fluid.

The location of the patch and/or its detectable change may be such that they can be detected by the beverage preparation apparatus only, not a user. This may help to prevent tampering with the patch.

There may further be provided a beverage preparation apparatus, suitable for receiving a cartridge according to the invention and for circulating or flowing fluid into said cartridge. The apparatus may comprise a wave source for emitting a wave to the patch, a wave sensor for sensing a wave reflected from the patch to obtain a sensor signal, and a signal processor for recognizing whether the patch has been exposed to fluid.

The combination of wave source, wave sensor and signal processor may be referred to hereinafter as the cartridge assessment system or consumable detection system. The wave may be a sound wave or a light wave.

The beverage preparation ingredient may be coffee or tea or chocolate powder or soup or baby food. For example, the beverage preparation ingredient may be tea leaves or may be coffee grounds. The soup or baby food may be powdered.

The fluid which dissolves and/or removes the patch of material may comprise or consist essentially of a liquid and/or steam. Typically, the fluid may be water or milk.

The cartridge may be present as a capsule, e.g. a rigid capsule, or as a pod or a pad. The capsule may or may not comprise a filter.

The patch of material is such that at least some of it will dissolve and/or be removed on contact with the fluid. The fluid may be present at an appropriate temperature depending on the nature of the beverage preparation ingredient. For example the fluid may be present at a temperature between about 20 °C and about 98 °C. For example, for coffee, including espresso, the temperature may be between about 80 °C and about 98 °C. For tea, the temperature may be between about 70 °C and about 98 °C. The patch of material may dissolve and/or be removed on contact with a fluid of a certain temperature, e.g. between about 20°C and about 98 °C, more particularly between about 70 °C and about 98 °C, even more particularly between about 80 °C and about 98 °C.

The patch of material may be made from a foodstuff or comprise or consist of a foodstuff. For example, the patch of material may consist of or comprise one or more of an edible ink, potato starch, dried coffee extract, water dissolvable and edible packaging material such as MonoSol Vivos films. The patch of material may consist of or comprise food ingredients which are dissolvable, coloured or capable of leaving a stain which may be detected. Suitable examples include turmeric, curry powder, saffron, boiled extraction from vegetables such as spinach, sprouts. Other examples include a coloured drinkable fluid which is dried at the spot where the patch is required, such as red wine.

The beverage preparation ingredient may be dissolved and/or infused and/or extracted under pressure. For example, the pressure may be from about 1 bar or greater than about 1 bar to about 20 bar.

The patch of material may be present on, or in contact with both an inner and outer surface of the cartridge and in such case may be referred to as a plug. The cartridge may comprise more than one patch of material. For example, the cartridge may comprise patches of material which are separated from each other and not in contact. There may be present separate patches of material on the inner and/or outer surfaces of the cartridge.

The detectable change may relate directly to the removal of the patch. For example, following contact with a fluid there may be present hole(s) or gap(s) in the patch and optionally in the cartridge. For those embodiments where there are holes or gaps in the cartridge itself, the patch of material may be present as a plug. Alternatively, the patch of material may serve to retain a plug in position prior to the plug being exposed to fluid. Where the patch of material serves to retain a plug in position, the patch of material may also be viewed as acting as a type of adhesive for the plug. This particular embodiment has the advantage that a relatively small amount of material needs to be dissolved by the circulating or flowing fluid to reveal a relatively large gap depending on the size of the plug. The holes or gaps in the patch and optionally in the cartridge may be detectable by unaided human visual inspection in typical lighting conditions, e.g. in daylight or in room-lit conditions. The patch of material may be an integral part of the cartridge in so far as in its absence there is present a gap or hole in the cartridge. The patch of material may not form an integral part of the wall in so far as in its absence there is no gap or hole present in the cartridge. The fluid may circulate or flow into the cartridge and through the beverage preparation ingredient. Some fluid may flow or circulate on the outside of the cartridge, particularly when the cartridge is a pod or a pad.

An advantage of the cartridge and the beverage preparation apparatus in accordance with the present invention is that it is readily detectable whether or not a cartridge which is intended as a single serve cartridge has been used previously. The apparatus may be adapted not to function if it detects that the cartridge has been used previously. Alternatively or additionally, the apparatus may be adapted to display an appropriate message to the user. Optionally, the cartridge, in particularly the patch, can be adapted so that the apparatus can determine what type of cartridge is being used and/or what ingredient is present.

### BRIEF DESCRIPTION OF THE DRAWINGS

Aspects of the present invention will now be described in more detail, with reference to the appended drawings showing embodiment(s) of the invention.
Figs. 1 and 1a show schematic illustrations of a cartridge in the form of a capsule and in accordance with the invention incorporating a dissolvable patch.
Figs. 2 and 2a show schematic illustrations of a cartridge in the form of a pod or pad and in accordance with the invention incorporating a dissolvable patch.
Figs. 3 and 3a show schematic illustrations of alternative embodiments of a cartridge in the form of a capsule and in accordance with the invention incorporating a dissolvable patch integral to a wall of the cartridge.
Figs. 4 and 4a show schematic illustrations of embodiments of a cartridge comprising the patch of material in the form of a plug or holding a plug in position.
Figs. 5 and 5a show schematic diagrams of a cartridge assessment system for use in the beverage preparation apparatus in accordance with the invention.
Figs. 6 and 6a show schematic diagrams of a beverage preparation apparatus according to the invention.

### DETAILED DESCRIPTION

The present invention will now be described with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference numerals in the drawings refer to like elements throughout.

Though the invention may tend to be described in relation to coffee, any of the aspects and/or embodiments described in relation to coffee are also applicable to other beverage preparation ingredients (such as tea). Similarly, the invention may tend to be described in relation to the use of water as the fluid, however any of the aspects and/or embodiments are applicable for use with fluids other than water or steam, such as milk, which are also suitable for use in connection with the preparation of beverages.

The cartridge may be in the form of a capsule, a pad or a pod and is suitable for holding a beverage preparation ingredient such as coffee or tea. As such, the cartridge may be any one of a coffee or tea capsule, a coffee or tea pad, or a coffee or tea pod. Coffee and tea capsules, pads and pods are all well known. For example, a coffee capsule typically comprises side, bottom and top walls, the capsule may have a shape that is substantially symmetrical around a vertical axis and the capsule is suitable for containing the beverage preparation ingredient to be dissolved, and/or infused, and/or extracted by the action of a fluid circulating or flowing into the capsule and through the ingredient. The capsule may be a rigid capsule comprising for instance a frustoconical body with side and bottom walls, the body being closed at the top with a circular membrane forming the top side. The capsule may also be square in shape, optionally with rounded corners or rectangular in shape, also optionally with rounded corners.

Extracting, infusing and/or dissolving the contents of a closed capsule is known and typically comprises of confining the capsule in a receptacle of an apparatus, sometimes referred to as a chamber, injecting a quantity of fluid into the capsule, generally after piercing a face of the capsule with a piercing injection element such as a fluid injection needle mounted on the apparatus, so as to create a pressurized environment inside the capsule either to extract the substance or dissolve it, and then releasing the extracted substance or the dissolved substance through the capsule. The extracted or dissolved substance is usually released from the face of the capsule opposite the face through which the fluid, e.g. water, has been introduced and typically is perforatable. However, in embodiments of the invention the extracted or dissolved substance maybe released or exit from the face of the capsule through which the fluid initially entered or flowed.

Apparatuses allowing the application of this principle are also known. Such an apparatus typically comprises a receptacle or chamber for the capsule and a perforation and/or injection element, e.g. in the form of a hollow needle comprising in its distal region one or more liquid injection orifices. The needle may have a dual function in that it opens the top portion of the capsule and that it forms the fluid inlet channel into the capsule. The fluid inlet channel may be present on an internal surface or external surface of the needle.

The apparatus may further comprise a fluid tank, (e.g. a water tank), for storing the fluid that is used to dissolve and/or infuse and/or extract the ingredient(s) contained in the capsule. The fluid tank may be removable from the apparatus to enable the user to fill it with fluid. The apparatus may further comprise a heating element such as a boiler or a heat exchanger which is able to warm up the fluid used therein to working temperatures (typically up to about 98°C). The apparatus may further comprise a pump element for circulating the fluid from the tank to the cartridge, optionally along or through the heating element.

Capsules have been developed for use in such apparatuses. Such capsules typically comprise a hollow body and an injection wall which is impermeable to fluids and to air and which is attached to the body and adapted to be punctured by, e.g. an injection needle of the apparatus; a chamber containing, for example, a bed of ground coffee or tea leaves to be extracted; a membrane, for example made from aluminum or similar material as the side walls, disposed at the bottom end of the capsule, the membrane being pierceable with piercing means for piercing dispensing holes in the membrane.

Depending on the type of beverage to be prepared, the preparation parameters may vary including delivery volume in cup, brew time, temperature of the fluid circulating or flowing through the cartridge and the pressure of the fluid inside the cartridge during preparation. Suitable examples of delivery volume in cup are about 60 ml to about 350 ml for coffee, for example about 25 ml to about 55 ml for espresso, about 120 ml to multiple cups for tea. Suitable examples of brew time are about 20 s to about 180 s for coffee, for example about 20 s to about 40 s for espresso, about 30 s to about 180 s for tea. Suitable examples of pressure are about 1 bar (ambient) to about 20 bar for coffee, for example about 8 bar to about 20 bar for espresso, for example about 1 bar (ambient) to about 1.5 bar for drip style or so called slow coffee, about 1 bar (ambient) for tea. Suitable examples of temperature are about 20 °C to about 98 °C. For example, for coffee, the temperature maybe about 80 °C to about 98 °C, including for espresso. For tea the temperature may be about 70 °C to about 98°C.

In embodiments of the invention at least one of the inner (or internal) or outer (or external) surfaces of the capsule may comprise a patch of material which is adapted to at least partially dissolve or be removed or incur a change by the (circulating or flowing) fluid and to cause a detectable change which indicates that fluid has circulated or flowed in to the capsule and through the ingredient or on the outside of the capsule and has made contact with the patch of material.

The patch may be incorporated with the capsule in numerous ways during manufacture. For example, the patch of material may be made from a foodstuff or comprise or consist of a foodstuff. For example, the patch of material may consist of or comprise one or more of an edible ink, potato starch, dried coffee extract, water dissolvable and edible packaging material such as MonoSol Vivos films. The patch of material may consist or comprise food ingredients which are dissolvable, coloured and capable of leaving a stain and which may be detected including turmeric, curry powder, saffron, boiled extraction from vegetables such as spinach, sprouts. The patch of material may consist or comprise latex or latex based material, water soluble polymer(s), gelatin or gelatin based material, sugar or sugar based material, fatty acid(s) or fatty acid based material. Other examples include a coloured drinkable fluid which is dried at the spot where the patch is required, such as red wine. The patch of material maybe incorporated on an inner and/or outer surface of the capsule during manufacture. The patch of material may be proud of at least one surface or flush (i.e. level or substantially level) with said surface. The patch maybe stuck on to at least one surface of the capsule or may form an integral part of said surface.

A second type of cartridge of a flat shape is generally called a pod or a pad and typically comprises or consists of two sections made of thin soft material which are paired in order to define a cavity in which a beverage preparation ingredient is placed. The material may be for example paper, or a cloth or a non woven fabric with filtering properties. The two sections are generally circular and are coupled along their outer edges defining an outer annular flange. The apparatuses which use pods typically have two approximate half shells which are sealed to define a chamber where the pod is placed or more generally a cavity to hold the pod or pad and a lid that closes around the pod or pad. The patch of material may be incorporated with the pod and/or pad in the same or a similar manner as described for the capsule. For embodiments relating to the pad or pod the patch may be advantageously positioned on at least one outer surface of said pod or pad. Given that a pod or pad typically comprises filtering properties, and it is therefore not necessary to pierce said pod or pad during operation, then any fluid in contact with an outer surface of the pod or pad will also likely come into contact with the beverage preparation ingredient.

The patch of material may be detected or assessed in use by what is referred to herein as a cartridge assessment system. More specifically, in assessing the cartridge it is the patch of material or at least part of the patch of material which is being detected and assessed. The cartridge assessment system may comprise at least one wave source such as a source of sound waves (e.g. ultrasound) or a source of light waves (e.g. visible, infrared or ultraviolet) or a combination thereof for emitting light or sound to the patch, a signal sensor or detector such as one or more light sensors or one or more sound sensors to detect the reflected wave and a signal processor for recognizing, based on the sensor signal, if the patch of material has been in contact with a fluid. Visible light may have a wavelength of about 390nm to about 700nm, infrared light may have a wavelength of about 700nm to about 1mm, ultraviolet light may have a wavelength of about 10nm to about 400nm. In embodiments of the invention, infrared light possessing a wavelength of up to about 940nm or up to about 1000nm may be suitable. In embodiments of the invention the light waves may have a wavelength of about 650nm to about 940nm. For those embodiments where the patch is located on an internal surface of the cartridge, the cartridge or at least the wall comprising the patch of material is sufficiently transparent so that an incident signal can come into contact with the patch and the reflected signal can be detected by the signal sensor or detector. As such, the patch may comprise at least one reflection element to generate a reflected signal to be detected by the sensor and generate a sensor signal which is dependent on the nature of the patch or at least part thereof. The light sensor may be configured to sense the intensity, colour, direction of incidence and/or polarization of light reflected from the reflection element.

The light source may for instance be a LED or a laser which may be provided at one or more positions and features a light beam emitted onto a specific part of the patch, for example a reflective part which has a predetermined characteristic. This characteristic might be that it is set at a determined angle, has a specific location or has defined reflective characteristics. Such an arrangement enables a specific sensor signal such as light intensity readout to be generated by a sensor such as a photodiode or a camera which can then be linked to the appropriate beverage preparation parameters via a signal processor. If the appropriate signal is not generated then the beverage preparation apparatus maybe programmed not to work and/or generate and display a suitable message to the user.

In an alternative embodiment, the light source and light sensor may be movable or arranged at a movable position with respect to the cartridge and wherein the light source maybe configured to emit a light beam, optionally in a predetermined direction so that the light beam sweeps over a predetermined surface of the cartridge. For instance, the light source and the light sensor may be mounted at a lid of the beverage preparation apparatus so that during or after closing of said lid the assessment process may be performed.

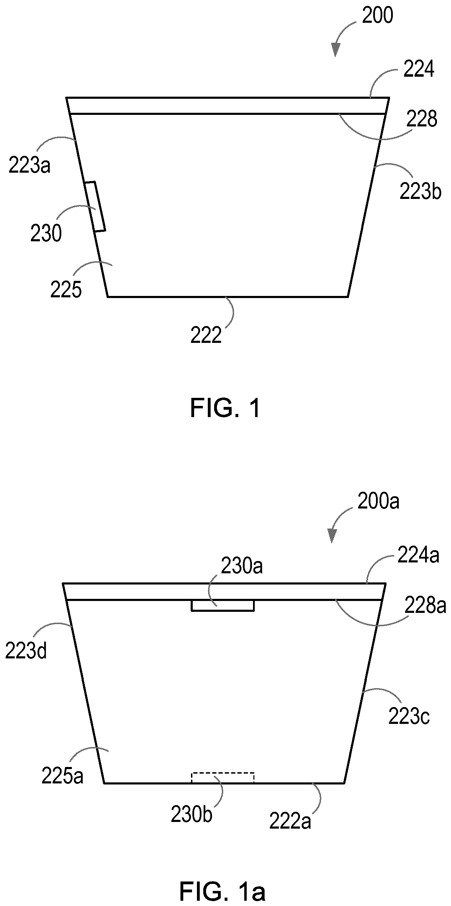

Figure 1 shows a cartridge in accordance with the invention in the form of a rigid capsule incorporating a dissolvable patch. Figure 1 is a schematic diagram of a capsule 200 according to the present invention. The capsule 200 is a sealed container containing a beverage preparation ingredient 225 such as coffee grounds. The capsule comprises a perforatable base 224 and a perforatable top 222. The capsule also comprises rigid side walls 223a and 223b. Once inserted into a suitable beverage preparation apparatus, one or more perforations may be made in the perforatable top 222 to form an inlet into which water may flow to reach the ingredients 225 and perforations may also be made in the perforatable base 224 so that the beverage produced by fluid flowing through the ingredients in the capsule 200 may exit the capsule. The capsule 200 may comprise a platform 228 on which the ingredients 225 may be supported during use. If the capsule 200 contains for instance coffee grounds 225, it maybe considered a type of brew chamber as heated and pressurised water flows through the capsule 200 to provide a coffee beverage. The capsule may comprise a patch of material 230 positioned on an internal or inner surface of the capsule, in the embodiment shown, on an internal surface of one of the side walls 223a. The patch of material is shown proud of the internal surface. Alternatively, the patch may be incorporated in the side wall, flush or level with the surface thereof. At least part of the or each side wall 223a, 223b maybe transparent or at least partially transparent to an incident energy wave such as a sound wave or a light wave. Given the capsule contains a beverage preparation ingredient, it would normally be the case that at least the wall on which the patch 230 is located will be sufficiently transparent or translucent to the incident and reflected signals.

In Figure 1a, essentially the same arrangement of a capsule 200a is shown as in Figure 1 apart from the positioning of the patch of material 230a. More particularly, the patch 230a is shown to be located either on a platform 228a, which typically is an inner surface of the perforatable base 224a. In addition or alternatively, a patch of material 230b may be present on a perforatable top 222a. The rigid side walls are indicated at 223c and 223d and the beverage preparation ingredient (e.g. coffee grounds) at 225a.

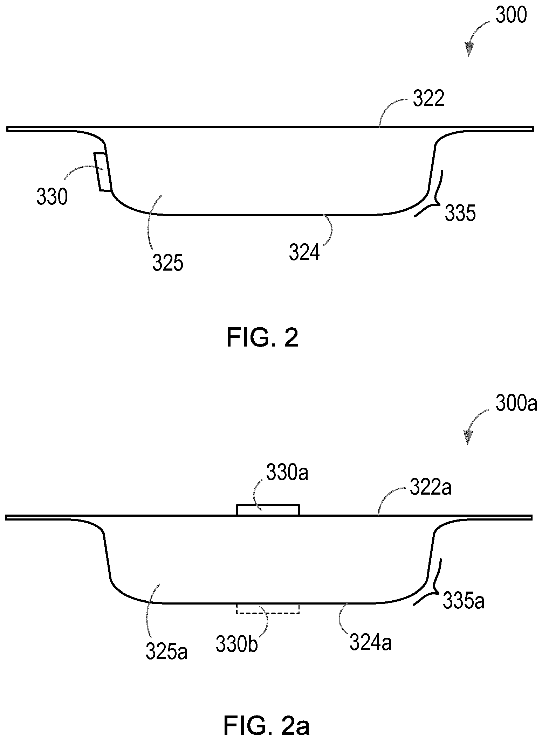

Figure 2 schematically shows a pad (or pod) 300 according to the present invention. The pad 300 may be formed as a container containing a beverage preparation ingredient such as coffee grounds or tea leaves 325. The pad may comprise a top 322 and a base 324 through which water may flow. In certain embodiments, either the top 322 or base 324 may function as the water inlet and the other one of the top 322 and base 324 may function as the water outlet. The pad 300 may be considered to be similar to a brew chamber as heated and, optionally pressurised water flows through the pad 300 containing coffee grounds (or tea leaves) 325 to provide a coffee (or tea) beverage. The pad may comprise a patch of material 330 positioned on a surface of the pad. In the embodiment shown, the patch of material 330 is located on an external surface of the base 324. The patch of material is shown proud of the surface. In alternative embodiments, the patch may be incorporated in the surface and may lie flush (or level) therewith. At least part of the top and/or base 322, 324 may be at least partially transparent or translucent to an incident energy wave (and the reflected wave) such as a sound wave or a light wave.

In Figure 2a, essentially the same arrangement is shown as in Figure 2, apart from the positioning of the patch of material 330a. The patch 330a is shown to be located on a top surface 322a and/or on a base 324a of the pod 300a.

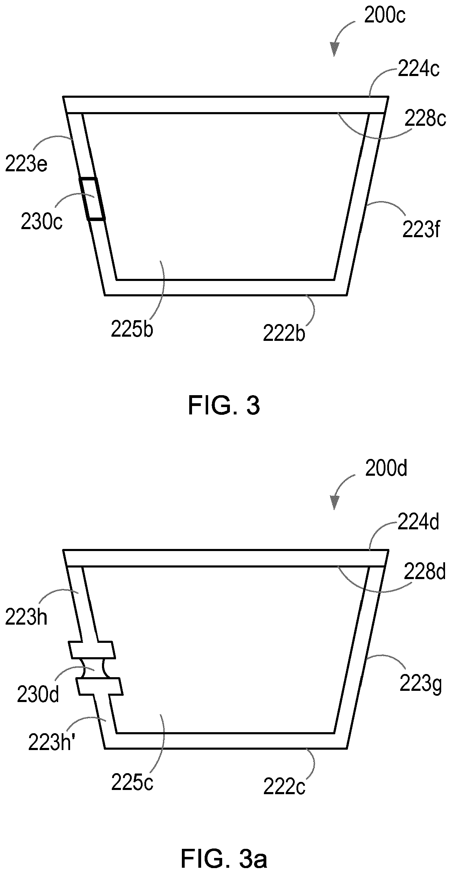

Figure 3 shows a further embodiment of a cartridge in the form of a rigid capsule 200c. The capsule 200c is similar to the one shown in Figures 1 and 1a, including a perforatable base 224c, a perforatable top 222b and rigid side walls 223e, 223f together forming a sealed container for a beverage preparation ingredient 225b, e.g. coffee grounds. The capsule 200c further comprises a dissolvable patch of material 230c, integrated in one of the side walls 223e so as to cover, fill or bridge a gap in said side wall 223e. The patch of material 230c may be integrally formed with the side wall 223e. It may have the same thickness as the side wall so as to lie flush or level therewith. Alternatively, it may be thinner or thicker than the side wall 223e. At least part of the or each side wall 223e, 223f may be transparent, or at last partially, to incident energy waves such as sound waves or light waves.

The cartridge 200d shown in Figure 3a comprises a perforatable base 224d, a perforatable top 222c and side walls 223g and 223h/223h'. The cartridge 200d may further comprise a platform 228d on which the beverage preparation ingredients 225c may be supported during use. One of the sidewalls is shown to feature a gap. The patch of material 230d is located in said gap, so as to cover the gap and link the wall part 223h above the gap to the wall part 223h' below the gap. The embodiment in Figure 3a illustrates that the side walls 223g and 223h/223h' of the cartridge do not necessarily need to run in a continuous straight line.

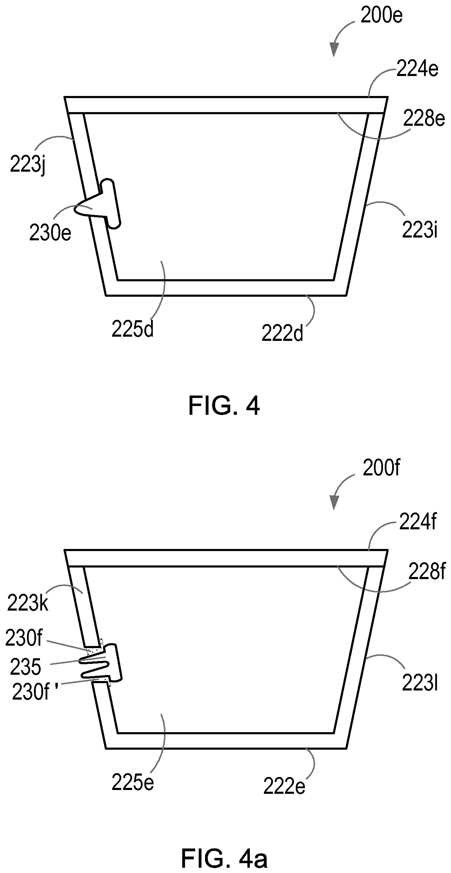

Figure 4 shows a further embodiment of a cartridge in the form of a rigid capsule 200e with a dissolvable patch 230e. The capsule 200e comprises a sealed container for a beverage preparation ingredient 225d. The container is formed by a perforatable base 224e, a perforatable top 222d and rigid side walls 223i and 223j. A platform 228e may be provided on which the ingredient 225d may be supported during use. The capsule further comprises a patch of material 230e, covering a gap in one of the side walls 223j. The patch may have the form of a plug, as illustrated. It may be in contact with or form part of an inner surface of the cartridge, an outer surface of the cartridge, or both surface. The patch of material may be proud of the internal surface, as shown. At least part of the or each side wall 223j, 223i may be at least partially transparent to an incident energy wave such as a sound wave or a light wave.

Figure 4a shows a further embodiment of a cartridge in the form of a rigid capsule 200f with a dissolvable patch or patches 230f, 230f. The capsule 200f comprises a perforatable base 224f, a perforatable top 222e and rigid side walls 223k and 2231 together defining a sealed container for a beverage preparation ingredient 225e such as coffee grounds. The capsule 200f may comprise a platform 228f on which the coffee grounds may be supported during use. The patch or patches 230f, 230f are designed to hold in place a plug of material 235 that is inserted in a gap of the cartridge. The patches of material 230f, 230f thus function as an adhesive, holding the plug of material 235 in place. At least one of the side walls 223k, 2231 may be transparent or at least partially transparent to an incident energy wave such as a sound wave or a light wave. This embodiment has the advantage that a relatively small patch of material needs to be dissolved or removed in order for a relatively large gap to be exposed. This may be of particular use when the cartridge is inspected by eye.

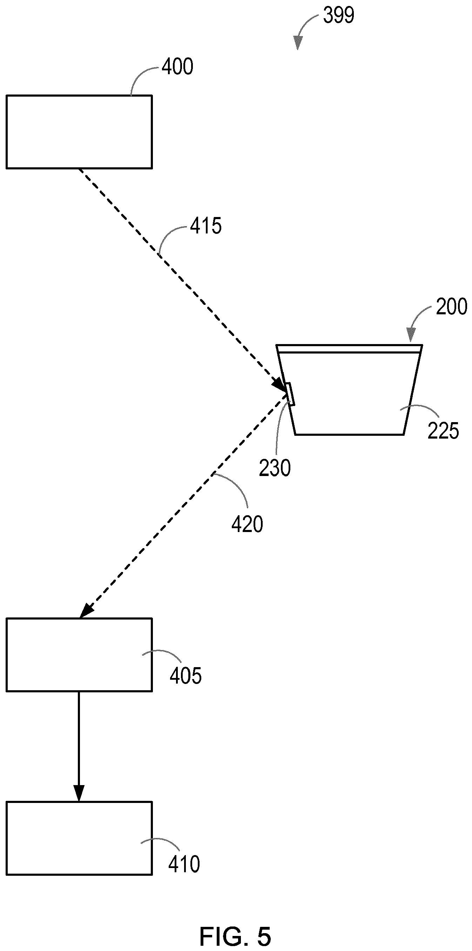

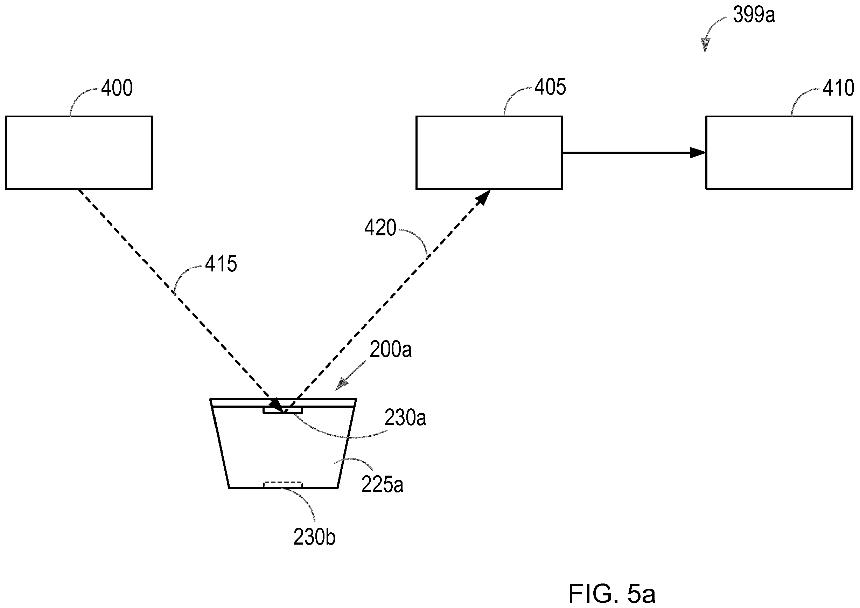

Figure 5 schematically shows a consumable or cartridge assessment system 399 for use in a beverage preparation apparatus according to the present invention. The system comprises a light source 400, e.g. a light emitting diode (LED), a light sensor 405 and a signal processor 410 for recognizing if a patch 230 present on an internal surface of a cartridge 200 has been exposed to a fluid such as water and optionally for recognizing the type of beverage preparation ingredient in the cartridge and/or the type of cartridge.

The light source 400 is configured to emit light 415 preferably in a predetermined direction to the cartridge onto the patch 230. The light sensor 405 is configured to sense light 420 reflected from the patch 230, to obtain a sensor signal. The sensor signal differs, depending on whether or not the patch has already been exposed to fluid.

Figure 5a shows essentially the same arrangement 399a as in Figure 5, apart from the patch of material 230a being located in a different position, corresponding to that shown in Figure 1a. Alternatively, the patch of material may be located as indicated at 230b in dotted lines.

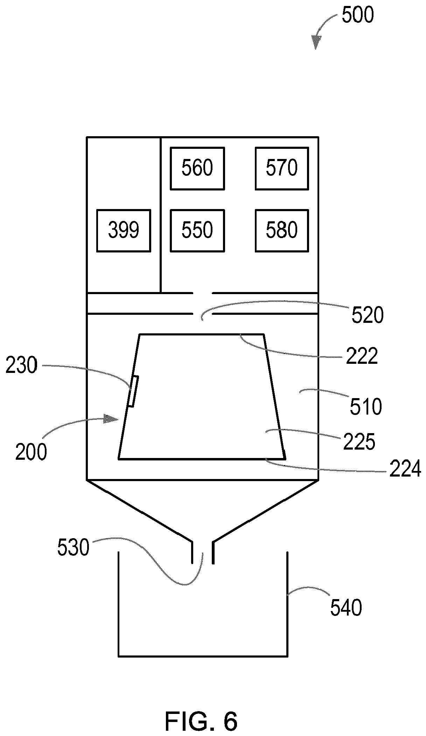

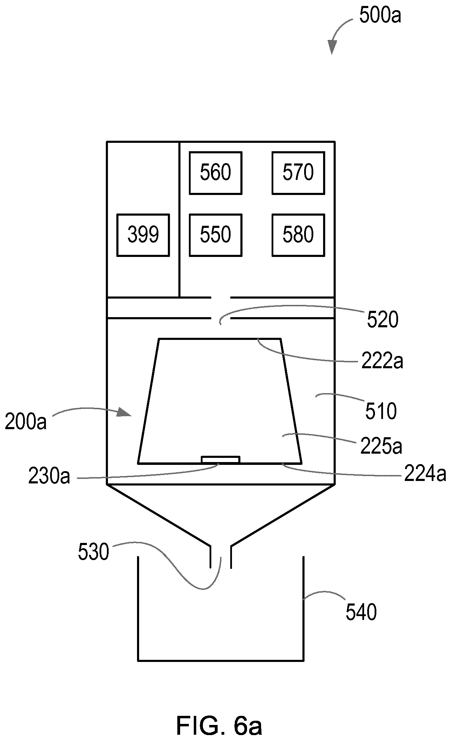

Figure 6 shows a beverage preparation apparatus 500 (500a) for producing a beverage such as coffee (or tea) from a cartridge with a patch of material 230 (230a). The cartridge may be a capsule 200 (200a) as illustrated in Figure 6 or a pod or pad as shown in Figure 2 or Figure 2a. The apparatus comprises a chamber 510 for confining or holding the cartridge. The chamber 510 has an inlet 520 for receiving a volume of fluid, e.g. water, and an outlet 530 through which produced beverage (e.g. coffee or tea) can exit the chamber. Furthermore, an injection needle may be provided (not shown) to pierce the cartridge through surface 222 (222a) and inject a fluid into said cartridge. If the cartridge is a pad or pod, such an injection needle is not required. The fluid (not shown) may circulate or flow through the beverage preparation ingredient 225 (225a) and through the base of the cartridge 224 (224a) which may be perforated following its placement into the chamber 510. A beverage container 540 may be positioned below the chamber outlet 530 to collect the beverage. In embodiments of the invention, the capsule 200 (200a) may be adapted so that its top and base may both function as fluid inlet and fluid outlet. In such an embodiment, there may not be a filter present in said capsule.

The apparatus 500 (500a) may further comprise a fluid supply unit 550, which may be removable, for supplying a volume of fluid, e.g. water, steam or milk to the chamber 510. The fluid supply unit 550 may comprise a fluid supply dosing unit 560 for supplying a pre-determined volume of fluid to the chamber 510. The apparatus 500 (500a) may further comprise a heater unit 570 for heating the fluid. The apparatus 500 (500a) may further comprise a pressurizing unit 580 for pressurizing the fluid. Suitable examples of delivery volume in cup are about 60 ml to about 350 ml for coffee, for example about 25 ml to about 55 ml for espresso, about 120 ml to multiple cups for tea. Suitable examples of brew time are about 20 s to about 180 s for coffee, for example about 20 s to about 40 s for espresso, about 30 s to about 180 s for tea. Suitable examples of pressure are about 1 bar (ambient) to about 20 bar for coffee, for example about 8 bar to about 20 bar for espresso, for example about 1 bar (ambient) to about 1.5 bar for drip style or so called slow coffee, about 1 bar (ambient) for tea. Suitable examples of temperature are about 20 °C to about 98 °C. For example, for coffee, the temperature may be about 80 °C to about 98 °C, including for espresso. For tea, the temperature may be about 70 °C to about 98 °C. The beverage preparation apparatus further comprises a consumable detection system or cartridge assessment system 399 (399a) with a light source 400, a light sensor 405 and a signal processor 410, which may be positioned in the vicinity of or at least partly in the chamber 510.

Figure 6a shows essentially the same arrangement as in Figure 6 apart from the patch of material 230a being located in a different position, in accordance with Figure 1a. In the above description of Figure 6 the equivalent features for Figure 6a are indicated in brackets.

The person skilled in the art realizes that the present invention is by no means limited to the preferred embodiments described above. On the contrary, many modifications and variations are possible within the scope of the appended claims.

Additionally, variations to the disclosed embodiments can be understood and effectuated by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain features are recited in mutually different dependent claims does not indicate that a combination of these features cannot be used to advantage.

## Claims

1. A cartridge for use with a beverage preparation apparatus, the cartridge containing a beverage preparation ingredient to be dissolved and/or infused and/or extracted by action of a fluid that in use is circulated through the ingredient by the beverage preparation apparatus, the cartridge comprising inner and outer surfaces wherein at least one of said inner and/or outer surfaces comprises a patch of material, said patch being adapted to at least partially dissolve or be removed by said fluid to cause a detectable change which indicates that the fluid has made contact with the patch of material.

2. A cartridge according to claim 1, wherein the patch of material fills or covers a gap or hole in the cartridge.

3. A cartridge according to claim 1 or 2, wherein the beverage preparation ingredient is coffee or tea or chocolate powder.

4. A cartridge according to any preceding claim, wherein the detectable change is adapted to be detected by a response to an incident light wave.

5. A cartridge according to claim 4, wherein the incident light wave is infrared light, ultraviolet light or visible light.

6. A cartridge according to any preceding claim, wherein the detectable change is adapted to be detected by a response to an incident sound wave.

7. A cartridge according to any preceding claim, wherein the cartridge is any one of a capsule, pad or pod.

8. A cartridge according to any preceding claim, wherein the patch is adapted to produce the detectable change through contact with water or milk.

9. A cartridge according to claim 8, wherein the patch is adapted to produce the detectable change through contact with water at a temperature between about 70 and about 98 °C and at a pressure between about 1 bar and about 20 bar.

10. A cartridge according to any preceding claim wherein the patch of material is adapted to indicate the type of cartridge and/or beverage preparation ingredient in the cartridge.

11. A cartridge according to any preceding claim wherein at least one part of the cartridge is at least partially transparent or translucent to an incident light wave.

12. A cartridge according to any preceding claim wherein the colour or structure of the patch of material is adapted to influence the reflection of an incident light wave.

13. A beverage preparation apparatus suitable for receiving a cartridge as claimed in any one of the preceding claims and for circulating or flowing fluid into said cartridge and through the beverage preparation ingredient, the apparatus comprising:
a wave source for emitting a wave to the patch of material,
a wave sensor for sensing a wave reflected from the patch to obtain a sensor signal, and
a signal processor for recognizing whether the patch has been exposed to fluid.

14. A beverage preparation apparatus according to claim 13, wherein the wave source is a light source or a sound source.

15. A beverage preparation apparatus according to claim 13 or 14, wherein the signal processor recognizes whether the patch is present in its entirety or if it is at least partially absent.
